Europäisches Patentamt

(19) European Patent Office    (11) Publication number: **0 003 392**

Office européen des brevets    **B1**

(12)    **EUROPEAN PATENT SPECIFICATION**

(45) Date of publication of patent specification: **14.10.81**    (51) Int. Cl.³: **C 03 B 23/023**

(21) Application number: **79300013.4**

(22) Date of filing: **04.01.79**

(54) Vacuum holder system and method for use in bending glass.

(30) Priority: **25.01.78 US 872202**

(43) Date of publication of application:
**08.08.79 Bulletin 79/16**

(45) Publication of the grant of the European patent:
**14.10.81 Bulletin 81/41**

(84) Designated Contracting States:
**BE CH DE FR GB IT LU SE**

(56) References cited:
**DE - B - 1 301 878**
**US - A - 3 468 645**
**US - A - 3 778 244**
**US - A - 4 092 141**

(73) Proprietor: **McMaster, Harold A.**
**420 Water Street**
**Woodville Ohio (US)**
(73) Proprietor: **Nitschke, John Stephen**
**324 East Second**
**Perrysburg Ohio (US)**

(72) Inventor: **McMaster, Harold A.**
**420 Water Street**
**Woodville Ohio (US)**
Inventor: **Nitschke, John Stephen**
**324 East Second**
**Perrysburg Ohio (US)**

(74) Representative: **Wisher, Michael Frederick et al,**
**Urquhart-Dykes & Lord 47 Marylebone Lane**
**London W1M 6DL (GB)**

Courier Press, Leamington Spa, England.

# Vacuum holder system and method for use in bending glass

This invention relates to a vacuum holder system and method for use in bending glass.

Bent glass is used extensively for vehicle side and rear windows and is usually tempered after the bending in order to have good resistance to breakage as well as an aesthetically appealing shape that complements the design of the vehicle. In order to perform the bending and subsequent tempering, sheet glass must be heated to its deformation point of about 1200° to 1300°F and then bent to the required shape before being rapidly cooled by an air spray in order to perform the tempering. Tempered glass has greatly increased mechanical strength and when broken forms relatively dull, small pieces instead of large sharp slivers as is the case with untempered glass.

One manner in which glass is conventionally bent and tempered is with press benders having shaped surfaces between which heated glass is clamped to shape it prior to being air cooled by a quench unit to provide tempering. United States Patents, 3,454,389; 3,476,542; 3,488,178; 3,600,150; and 3,951,634 disclose press bending and tempering apparatus for sheet glass.

Sheet glass is also bent and tempered by heating of planar glass sheets while supported on bending molds including movable sections. Prior to softening of the glass during heating, the sections of the mold are oriented to accommodate for the glass sheet planarity. Upon softening of the glass sheet as it is heated, the mold sections move relative to each other under the force of gravity acting on the glass sheet and on the mold sections in order to provide bending of the glass sheet prior to rapid cooling thereof which provides its tempering. Thin glass, i.e. on the order of 0.32 cm (1/8"), cannot be bent by this apparatus since it does not have sufficient weight to provide the impetus for pivoting the mold sections under the force of gravity and the thin glass would overbend before becoming hot enough to temper. United States Patents 3,269,822; 3,278,287; 3,307,930; and 3,365,285 disclose this type of bending and tempering apparatus.

Heating of glass sheets prior to bending and tempering thereof has also been performed on fluid support beds as the glass is conveyed through a furnace. Normally the support bed is inclined slightly with respect to the horizontal so that gravity engages an edge of the glass with a movable frame that provides the impetus for glass movement along the bed. There is no contact between the bed and the oppositely facing surfaces of the glass during the conveyance as the glass is heated. This lack of contact prevents marring and scratching of the soft surfaces of the glass as the glass reaches its deformation temperature. However, there normally is mechanical contact with the glass during the bending after the heating in preparation for the cooling quench that tempers the glass in its bent condition. United States Patents 3,497,340; 3,607,187; and 3,607,200 disclose glass bending and tempering apparatus of this type with a fluid support bed.

Vacuum forming of heated glass sheets is disclosed by United States patent 3,778,244 wherein sheet glass is first heated during conveyance along a roller hearth conveyor. After heating, a holder with a curved downwardly facing surface has a vacuum applied thereto about the surface to shape the glass. After shaping against the curved surface of the holder, the vacuum is terminated to drop the glass onto a mould for conveyance to a waiting operator who removes the glass from the mould. Further vacuum forming of the glass to a curved surface of the mould is also disclosed.

Other bending and tempering apparatus for sheet glass is disclosed by United States Patents 2,223,124; 2,348,887; 2,646,647; and 2,085,520.

The invention is concerned with providing an improved system and method for use in bending glass wherein a vacuum holder having a surface including spaced openings has a vacuum initially drawn within the openings to support a heated sheet of glass against the holder surface.

With the aforementioned improved system and method, the problem arises that localised dimple-like formations are sometimes formed at the spaced openings in the vacuum holder surface.

It is an aim of the invention to alleviate the aforementioned problem with both thick and thinner glass sheets, and according to one aspect of the invention there is provided a system for bending glass sheets including a heating chamber; a horizontal conveyor for conveying glass sheets through the heating chamber for heating thereof; and a vacuum holder positioned within the heating chamber above the conveyor and having a downwardly facing surface including spaced openings in which a vacuum is drawn such that a heated glass sheet is received by the holder from the conveyor and thereafter released upon termination of the vacuum so as to be received by a mold below the holder for bending of the glass sheet, the system being characterized by: a control unit that (1) initially draws the vacuum within the holder surface openings to secure a heated glass sheet received from the conveyor against the holder surface, (2) thereafter reduces the extent of vacuum drawn so as to support the heated sheet of glass without deforming the glass sheet at the spaced openings, and (3) subsequently supplies positive gage pressure gas to the holder surface openings to force the heated glass sheet downwardly away from the holder surface so as to be received by the mold for bending.

According to another aspect of the invention there is provided a method for supporting and releasing heated sheets of glass during a glass bending process, the method comprising: conveying a glass sheet through a heating chamber on a horizontal conveyor for heating thereof and positioning below a vacuum holder spaced above the conveyor, the method being characterized by: initially drawing a vacuum within spaced openings in a downwardly facing surface of the vacuum holder so as to secure the heated sheet of glass in engagement with the surface; thereafter reducing the degree of vacuum drawn within the holder surface openings to prevent deformation of the heated glass sheet at the spaced openings during support thereof against the holder surface; and subsequently supplying positive gage pressure gas to the holder surface openings so as to force the sheet of glas downwardly away from the holder surface and onto a mold below the holder for bending of the glass sheet.

Any adherence of the glass to the holder surface due to the softened glass condition is prevented from retaining the glass sheet against the surface by the pressurised air which blows the glass away from the surface.

In the preferred construction disclosed, a control unit including a damper controls communication of a first vacuum blower and a second positive pressure air blower with the openings in the holder surface. After communicating the vacuum blower with the holder surface to intially support the glass on the holder, the damper is positioned to reduce the extent of vacuum drawn and thereby prevent deformation of the heated glass at the holder surface openings. Subsequent positioning of the damper terminates the communication of the vacuum blower with the holder surface openings and communicates the positive pressure air blower with these openings in order to provide the blowing of the glass downwardly away from the holder surface.

The damper includes a housing and vanes fixed with respect to each other projecting from a central axis of rotational support within the housing. Circumferentially spaced ducts communicate the housing with the vacuum and positive pressure air blowers and with a plenum above the spaced holder surface openings. An opening in the housing initially exhausts the pressurized air from the second blower to the atmosphere. Both blowers are then isolated from the holder and this isolation prevents heat at the holder surface from escaping to the environment. Pressure applied to the vanes by each blower and the atmosphere is balanced in both directions of rotation to facilitate rotation of the vanes.

An actuator including a digital positioner such as an electric stepper motor rotates the vanes in an accurately controlled manner. Upon vane rotation to a first position, the vacuum blower is communicated with the holder surface openings to provide vacuum pickup and support of a heated sheet of glass. The positive pressure air blower is then still blowing air out through the opening of the damper housing. Rotation of the vanes to a second position reduces the extent of communication between the vacuum blower and the holder surface openings to a limited extent also allows some of the pressurized air from the positive pressure air blower to be drawn around one vane by the vacuum blower. Upon rotation of the vanes to a third position, the vacuum blower is isolated by the vanes from the holder surface openings and the positive pressure air blower feeds the pressurized air to the openings in order to blow the glass sheet downwardly away from the surface. The vanes are then rotated to a final position and then isolate the blowers as well as the damper housing opening from the holder surface openings. Three vanes are utilized in the preferred embodiment disclosed and a complete cycle takes place during each 120° rotation of the vanes by the stepper motor actuator.

While the system and method is shown and described in connection with gravity bending of sheet glass, it is also possible to vacuum form the glass on the holder surface. Additional gravity bending can be performed after releasing the bent glass from the holder.

The digital positioner of the actuator can be remotely programmed to facilitate operation of the damper from a control panel. All controls for the system can be located at the panel while the damper is located above a furnace in which the holder is received at a remote location from the panel. Both operation and programming for operation are performed remotely from the damper at the panel.

The object, features, and advantages of the present invention are readily apparent from the following description of the best mode for practising the invention taken in connection with the accompanying drawings.

FIGURE 1 is an elevation view showing a system for use in bending glass in accordance with the teachings of this invention;

FIGURE 2 is a view of a control unit damper shown in FIGURE 1 moved to a position that communicates a vacuum blower with a vacuum holder of the system;

FIGURE 3 is a view similar to FIGURE 2 in which the damper is moved to a position that reduces the extent of vacuum drawn; and

FIGURE 4 is a view similar to FIGURE 3 in which the damper is positioned so as to communicate a positive pressure air blower with the holder.

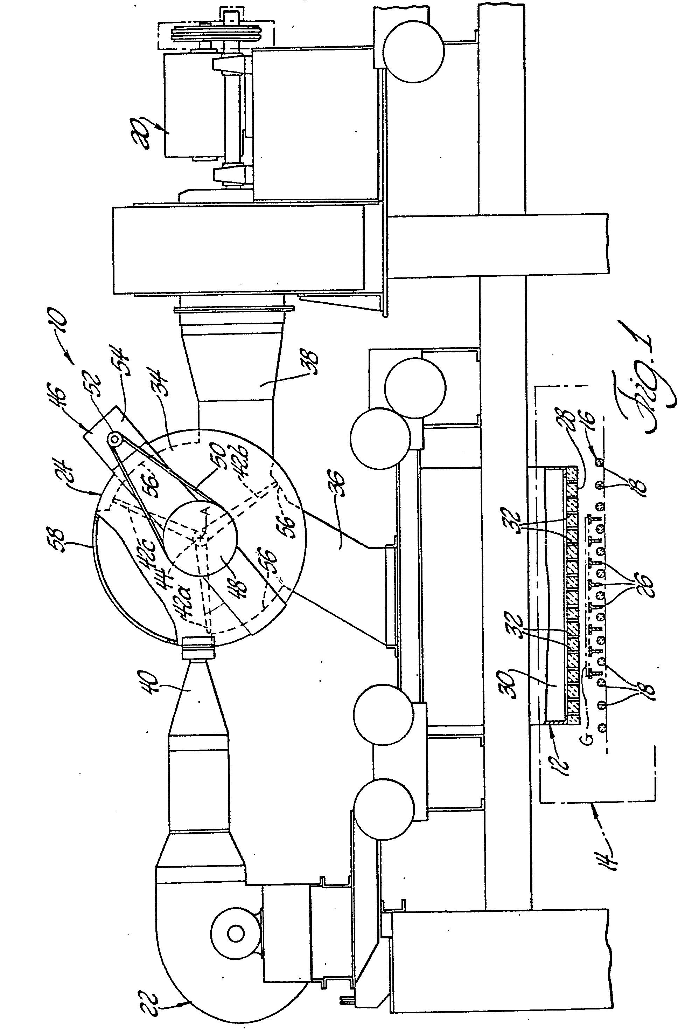

Referring to FIGURE 1 of the drawings, a system for use in bending glass in accordance with this invention is indicated collectively by reference numeral 10 and includes a vacuum holder 12 located within a furnace heating chamber 14. Sheets of glass G are conveyed through the heating chamber by a roller hearth conveyor 16 on horizontally extending conveyor rolls 18. When the heated sheet of glass G moves under the holder 12, the cooperable action of vacuum and positive pressure air blowers 20 and 22 selectively communicated with the holder by a control unit that includes a control damper 24 provides for lifting and subsequent releasing of the sheet of glass by the holder. Auxiliary lifters 26 movable vertically between the conveyor rolls may be utilized to initially lift the sheet of glass G up off the rolls toward a downwardly facing planar surface 28 of the holder below a plenum 30. Spaced openings 32 in surface 28 allow a vacuum drawn within the plenum 30 to suck the glass G upwardly off of the lifters 26 and into supported engagement with the holder surface 28. The lifters 26 are then moved downwardly and a mold (not shown) is moved under the holder. Pressurized air supplied to the holder surface openings 32 at a positive gage pressure then blows the sheet of glass G downwardly onto the mold so that the glass can bend under the force of gravity to a curved shape of the mold. The bent sheet of glass can then be moved to a quench unit for tempering. It is also possible for the holder 12 to be movable vertically instead of using the vertically movable auxiliary lifters 26.

Control damper 24 includes a housing 34 communicated by respective ducts 36, 38, and 40 with the holder 12, the vacuum blower 20, and the positive pressure air blower 22. Vanes 42a, b, and c are fixed on a shaft 44 within the damper housing 34 and mounted for rotation about an axis A in order to control communication of the blowers 20 and 22 with the vacuum holder 12. An actuator 46 for rotating the shaft 44 includes a sheave 48 fixed to the shaft and a continuous belt 50 trained over this sheave and over a sheave 52 of a digital positioner such as the stepper motor 54. Accurate positioning of the damper vanes 42a, b and c can be achieved due to the use of a digital positioner. Also, the actuator 46 can be remotely programmed as well as operated due to the provision of its digital positioner.

Prior to the beginning of each cycle, the control damper 24 has its vanes oriented as shown in FIGURE 1 although each vane begins successive cycles at the next adjacent counterclockwise position as will be more fully described later. Outer ends of the vanes are slidably engaged with curved surfaces 56 of the damper housing in a sealed relationship. Both the vacuum blower 20 and the positive pressure air blower 22 can continue to operate between cycles without any shut-down since the vanes 42a and 42b isolate the blowers from the plenum 30 of the vacuum holder and hence from the openings 32. Vacuum blower 20 thus draws a vacuum between the vanes 42b and 42c in this position, while the positive pressure air blower 22 delivers pressurized air at a positive gage pressure to the damper housing between the vanes 42a and 42c. A housing opening 58 feeds the pressurized air from the damper housing to the atmosphere. No heat is lost from the holder 12 to the atmosphere through this opening 58 of the damper housing due to the isolation of the holder provided by the vanes 42a and b. Also, the forces applied to the vanes by the vacuum from blower 20 and by air from blower 22 and from the atmosphere is balanced in both directions of rotation to facilitate rotation of the vanes.

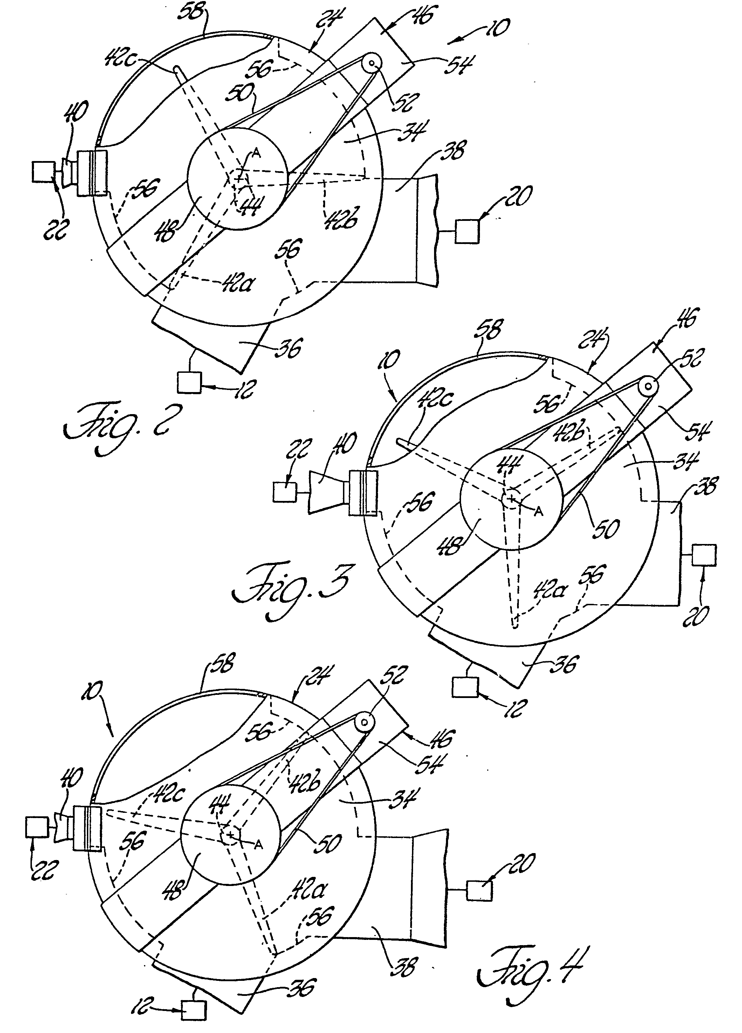

Upon commencement of a cycle, the digital positioner actuator 46 rotates the vanes counterclockwise to the position shown in FIGURE 2 so that the vanes 42a and b cooperatively communicate the vacuum blower duct 38 and the holder duct 36. Vacuum blower 20 then draws a vacuum within the vacuum holder 12 so that glass can be lifted and supported by the holder in the manner previously described. Pressurized air from the positive pressure air blower 22 continues to be delivered to the damper housing 34 between the vanes 42a and c and exhausted to the atmosphere through the housing opening 58.

After the sheet of glass has been moved upwardly into engagement with the lower surface of the holder as previously described, the digital positioner actuator 46 rotates the damper vanes 42a, b, and c counterclockwise from the position of FIGURE 2 to the position of FIGURE 3. Vanes 42a and 42b continue to communicate the holder and vacuum blower ducts 36 and 38 to a limited extent so that a reduced vacuum is drawn within the holder 12. This reduced vacuum prevents the heated glass sheet from being deformed at the spaced openings 32 of the holder surface 28 shown in FIGURE 1. Positive pressure air blower 22 continues to deliver pressurized air to the damper housing and some of this air is exhausted to the atmosphere through the housing opening 58 while some of the air is also sucked around the vane 42a and out through the duct 38 by the vacuum blower 20.

After the glass has been lifted and the mold moved under the holder in the manner previously described in connection with FIGURE 1, digital positioner actuator 46 rotates the damper vanes 42a, b, and c counterclockwise from the position of FIGURE 3 to the position of FIGURE 4. Vacuum blower 20 is then isolated from the holder 12 while the vanes 42a and c communicate the duct 36 of the holder 12 and the duct 40 of the positive pressure air blower 22. Blower 22 thus supplies pressurized air at a positive gage pressure to the holder 12 so as to aid gravity in forcing the sheet of glass downwardly onto the mold. Bending of the glass to the curved shape of the mold then takes place under the force of gravity. Actuator 46 subsequently rotates the damper vanes 42a, b and c counterclockwise so that each vane occupies the position initially occupied by the next adjacent counterclockwise vane prior to the commencement of the lifting cycle as in FIGURE 1.

It should be noted that when three vanes are utilized with the control damper 24 as herein shown, three lifting operations take place during each full revolution of the vanes, one operation during each 120°C rotation.

It is also possible to form glass on a curved holder surface by the system and method of this invention as well as gravity forming the glass in the manner previously described. Additional gravity bending on the mold can be performed after the bent glass is released from the holder. Relatively deep bends can be performed by the combined surface forming and gravity bending.

## Claims

1. A system for bending glass sheets including a heating chamber (14); a horizontal conveyor (16) for conveying glass sheets through the heating chamber for heating thereof; and a vacuum holder (12) positioned within the heating chamber above the conveyor and having a downwardly facing surface (28) including spaced openings (32) in which a vacuum is drawn such that a heated glass sheet is received by the holder from the conveyor and thereafter released upon termination of the vacuum so as to be received by a mold below the holder for bending of the glass sheet, the system being characterized by: a control unit (24) that (1) initially draws the vacuum within the holder surface openings (32) to secure a heated glass sheet (G) received from the conveyor (16) against the holder surface (28), (2) thereafter reduces the extent of vacuum drawn so as to support the heated sheet of glass without deforming the glass sheet at the spaced openings, and (3) subsequently supplies positive gage pressure gas to the holder surface openings to force the heated glass sheet downwardly away from the holder surface so as to be received by the mold for bending.

2. A method for supporting and releasing heated sheets of glass during a glass bending process, the method comprising: conveying a glass sheet (G) through a heating chamber (14) on a horizontal conveyor (16) for heating thereof and positioning below a vacuum holder (12) spaced above the conveyor, the method being characterized by: initially drawing a vacuum within spaced openings (32) in a downwardly facing surface (28) of the vacuum holder (12) so as to secure the heated sheet (G) of glass in engagement with the surface; thereafter reducing the degree of vacuum drawn within the holder surface openings to prevent deformation of the heated glass sheet at the spaced openings during support thereof against the holder surface; and subsequently supplying positive gage pressure gas to the holder surface openings so as to force the sheet of glass downwardly away from the holder surface and onto a mold below the holder for bending of the glass sheet.

## Revendications

1. Dispositif pour courber des feuilles de verre, comprenant une chambre de chauffage (14), un convoyeur horizontal (16) destiné à transporter les feuilles de verre dans la chambre de chauffage pour chauffer ces feuilles; et un porteur de feuille aspirant (12) placé dans la chambre de chauffage au-dessus du convoyeur, ce porteur de feuille présentant une surface tournée vers le bas (28) munie d'ouvertures espacées (32) par lesquelles on applique l'aspiration de façon que la feuille de verre chauffée quitte le convoyeur pour venir se plaquer sur le porteur de feuille, puis soit ensuite libérée du porteur de feuille pour venir se placer sur un moule situé au-dessous de ce porteur de feuille, de manière à former la courbure de la feuille de verre, dispositif caractérisé en ce qu'il comprend un bloc de commande 24 destiné à (1) aspirer initialement l'air par les ouvertures (32) de la surface du porteur de feuille, de manière à plaquer contre la surface (28) de celui-ci une feuille de verre chauffée (G) provenant du convoyeur (16), (2) réduire ensuite la force d'aspiration de manière à supporter la feuille de verre chauffée sans la déformer à l'endroit des ouvertures espacées, et (3) appliquer enfin une pression d'air positive à travers les ouvertures de la surface du porteur de feuille pour pousser la feuille de verre chauffée vers le bas en la séparant de la surface du porteur de feuille, de façon qu'elle vienne se placer sur le moule pour se courber.

2. Procédé pour supporter et libérer des feuilles de verre chauffées pendant un processus de courbure de ces feuilles de verre, ce procédé consistant notamment à transporter une feuille de verre (G) dans une chambre de chauffage (14) en la faisant passer sur un convoyeur horizontal (16), de manière à chauffer cette feuille et à la placer au-dessous d'un porteur de feuille aspirant (12) disposé au-dessus du convoyeur, procédé caractérisé en ce qu'il consiste à produire une aspiration initiale par les ouvertures espacées (32) d'une surface tournée vers le bas (28) du porteur de feuille (12), de manière à plaquer la feuille de verre chauffée (G) contre cette surface (28); à réduire ensuite la force d'aspiration à travers les ouvertures de la surface du porteur de feuille pour éviter la déformation de la feuille de verre chauffée à l'endroit des ouvertures espacées pendant que cette feuille est plaquée contre la surface du porteur de feuille; et à appliquer enfin une pression de gaz positive à travers les ouvertures de la surface du porteur de feuille, de manière à pousser la feuille de verre vers le bas en la séparant de la surface du porteur de feuille et en la faisant tomber sur un moule placé au-dessous du porteur de feuille, ce moule étant destiné à courber la feuille de verre.

**Patentansprüche**

1. Anordnung zum Biegen von Glasscheiben, mit einer Heizkammer, einer die Glasscheibe zwecks Aufheizens durch die Heizkammer horizontal bewegenden Fördereinrichtung sowie einer innerhalb der Heizkammer und oberhalb der Fördereinrichtung angeordneten Vakuum-Halteeinrichtung, an deren der Fördereinrichtung zugewandten Unterseite im Abstand voneinander, die Bildung eines Vakuums zulassende Öffnungen vorgesehen sind, so daß die aufgeheizte Glasscheibe von der Fördereinrichtung abgenommen und nach Abschalten des Vakuums freigegeben wird, um an einer unterhalb der Halteeinrichtung befindlichen Form zwecks Verformung zur Auflage zu kommen, dadurch gekennzeichnet, daß eine Steuereinrichtung (24) vorgesehen ist, durch die 1.) zunächst ein Vakuum an den Öffnungen (32) der Halteeinrichtung (12) zwecks Haltens der von der Fördereinrichtung (16) an der Unterseite (28) der Halteeinrichtung aufgenommenen aufgeheizten Glasscheibe (G) bewirkbar ist, durch die 2.) das Vakuum anschließend nur noch in dem Maße aufrechterhaltbar ist, als es für das Halten der aufgeheizten Glasscheibe ohne deren Deformierung an den im Abstand voneinander liegenden Öffnungen erforderlich ist, und durch die 3.) anschließend den Öffnungen in der Halteeinrichtung Druckgas dosierbar zuführbar ist, um die aufgeheizte Glasscheibe (G) von der Unterseite (28) nach unten gegen die Form zwecks weiterer Formgebung zu drücken.

2. Verfahren zur Halterung und Freigabe einer aufgeheizten Glasscheibe während eines Glasbeigevorganges, wobei die Glasscheibe zum Aufheizen auf einer waagerechten Fördereinrichtung durch eine Heizkammer hindurchgeleitet und der Unterseite einer oberhalb der Fördereinrichtung angeordneten, eine Aufnahme bildenden Vakuum-Halteeinrichtung zugeordnet wird, dadurch gekennzeichnet, daß zunächst durch im Abstand voneinander liegende Öffnungen (32) in der der Glasscheibe (G) zugewandten Unterseite (28) der Vakuum-Halteeinrichtung (12) ein Vakuum erzeugt wird, derart, daß die aufgeheizte Glasscheibe an dieser Unterseite zur Anlage kommt und daß das Vakuum innerhalb der Öffnungen allmählich reduziert wird, um Verformungen der aufgeheizten Glasscheibe an den Öffnungen während des Haltens an der zugeordneten Fläche dieser Unterseite zu verhindern, und daß anschließend den Öffnungen dosierbar Druckgas zugeleitet wird, durch das die Glasscheibe von der Unterseite der Vakuum-Halteeinrichtung weg nach unten auf eine unter dieser angebrachten Form für das Formen der Glasscheibe gedrückt wird.

Fig. 1

Fig. 2

Fig. 3

Fig. 4